Europäisches Patentamt

European Patent Office

Office européen des brevets

(11) Veröffentlichungsnummer: **0 348 709**
**A2**

(12) **EUROPÄISCHE PATENTANMELDUNG**

(21) Anmeldenummer: **89110421.8**

(22) Anmeldetag: **08.06.89**

(51) Int. Cl.4: **G01B  11/24**

(30) Priorität: **28.06.88 DE 8808293 U**

(43) Veröffentlichungstag der Anmeldung:
**03.01.90 Patentblatt  90/01**

(84) Benannte Vertragsstaaten:
**BE DE ES FR GB IT NL SE**

(71) Anmelder: **Siemens Aktiengesellschaft**
**Wittelsbacherplatz 2**
**D-8000 München 2(DE)**

(72) Erfinder: **Marguerre, Hans-Helmut**
**Königstrasse 6**
**D-7541 Straubenhardt 2(DE)**

(54) **Optische Anordnung zur dreidimensionalen Formerfassung von prüfobjekten mit strukturierter Beleuchtung mit lichtablenkenden Rastern.**

(57) Die Erfindung betrifft eine optische Anordnung zur dreidimensionalen Formerfassung von Prüfobjekten mit strukturierter Beleuchtung. Um auf einfache Weise auch entfernungsabhängige Bilddaten bei der Formerfassung auszuwerten, ist im Strahlengang der optischen Anordnung ein lichtablenkendes Raster, beispielsweise aus Zylinderlinsen, angeordnet.

Die Erfindung ist vor allem bei Oberflächenprüfungen in der Automobilherstellung anwendbar.

EP 0 348 709 A2

FIG 1

## Optische Anordnung zur dreidimensionalen Formerfassung von Prüfobjekten mit strukturierter Beleuchtung mit lichtablenkenden Rastern

Technisches Gebiet

Die Erfindung betrifft eine Anordnung mit den Merkmalen des Oberbegriffs des Anspruchs 1.

Stand der Technik

Bei einer bekannten Anordnung dieser Art (DE-OS 32 43 680) werden die von dem zu untersuchenden Objekt reflektierten Lichtstrahlen mit einer Videokamera erfaßt und mit einer elektronischen Auswerteeinrichtung hinsichtlich der Erkennung von Unebenheiten an der zu untersuchenden Oberfläche mit einem Monitor dargestellt bzw. in automatischen Bildauswertesystemen weiterverarbeitet. Bei der bekannten Anordnung wird die untersuchte Oberfläche mit einer überlagerten Rasterstruktur der Lichtstrahlen, z. B. durch ein optisches Gitter in der Beleuchtungseinrichtung, beaufschlagt. Ist die zu untersuchende Oberfläche eine glatte Ebene, so wird die Rasterstruktur der Lichtstrahlen ungestört reflektiert, weist die zu untersuchende Oberfläche jedoch räumliche Abweichungen von einer glatten Ebene auf, so macht sich dies in einer Verzerrung der Rasterstruktur auf dem Monitor bemerkbar. Somit kann hier eine Kontrastierung von dreidimensionalen Strukturen auf glänzenden Oberflächen vorgenommen werden. Anwendungsgebiete sind beispielsweise die Erkennung von Beschädigungen, Verschmutzungen, Materialfehlern, Fertigungsfehlern oder Formabweichungen an Lack-, Kunststoff-, Metall- oder Glasoberflächen. Die Erkennung von solchen störenden dreidimensionalen Unebenheiten ist von Bedeutung bei der Kontrolle von Automobilkarosserien im Lackierbetrieb oder von Blechen mit oder ohne Beschichtung nach verschiedenen Bearbeitungsvorgängen, wie Walzen, Schneiden oder Beschichten (Eloxieren, Galvanisieren).

Darstellung der Erfindung

Der Erfindung liegt die Aufgabe zugrunde, eine Anordnung der eingangs angegebenen Art derart weiterzubilden, daß auf einfache Weise auch entfernungsabhängige Bilddaten bei der Formerfassung gewonnen werden können.

Zur Lösung dieser Aufgabe weist eine solche Anordnung die Merkmale des Kennzeichens des Anspruchs 1 auf.

Die erfindungsgemäße Optikanordnung ermöglicht in vorteilhafter Weise die Gewinnung von entfernungsabhängigen Bilddaten durch die Kontrastierung von Prüfobjekten mit lichtablenkenden Rastern. Diese optische Signalaufbereitung dient entweder als Sehhilfe für den Sichtprüfer oder bildet die Basis für die Bilddatenverarbeitung. Hierzu wird das zu untersuchende Objekt mit einer Videokamera aufgenommen. Im Vergleich zu bekannten Verfahren der Kontrastierung mit lichtabsorbierenden Rastern liefern lichtablenkende Raster zusätzliche entfernungsabhängige Bilddaten. Außerdem besteht die Möglichkeit zur Projektion eines Meßvolumens (projiziertes Meßvolumen), dessen Größe und Lage im Raum vorwählbar ist. Vorteile sind dabei eine höhere Meßgenauigkeit und eine bessere Anpassung an die Sichtprüfaufgabe.

Kurze Beschreibung der Erfindung

Die Erfindung wird anhand der Figuren erläutert, wobei

Figur 1 eine Prinzipdarstellung einer erfindungsgemäßen Optikanordnung und

Figur 2 den Strahlengang in der Optikanordnung zeigt.

Bester Weg zur Ausführung der Erfindung

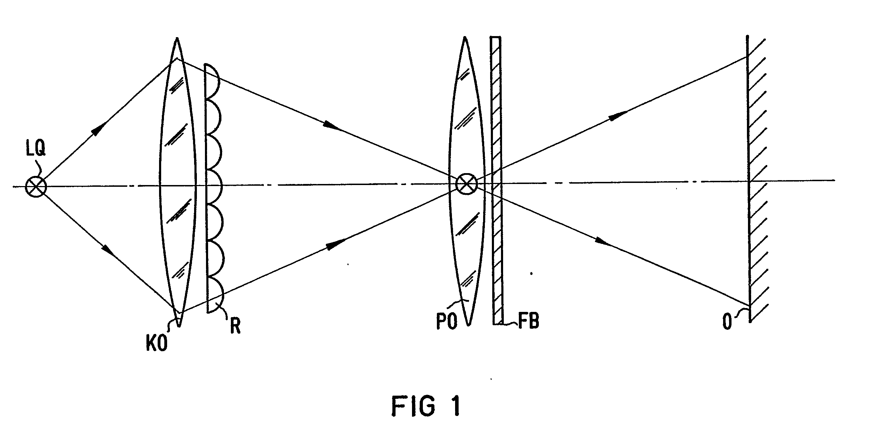

Die Optikanordnung nach Figur 1 enthält folgende Komponenten:
- eine Lichtquelle LQ, die als Punktlichtquelle oder an die Rasterstruktur angepaßte Lichtquellenform, wie z. B. Linearlicht oder Ringlicht, ausgeführt sein kann;
- eine Kondensoroptik KO, welche bei entfernter Rastervorlage ein Bild der Lichtquelle LQ in einem Projektionsobjektiv PO entwirft;
- ein lichtablenkendes Raster R, wobei Lösungsvorschläge unter Verwendung einzelner oder mehrerer überlagerter lichtablenkender Raster R sowie Kombinationen von lichtabsorbierenden mit lichtablenkenden Rastern existieren;
- ferner ist ein Filter FB oder eine Blende FB vorhanden. Es können darüber hinaus noch Farbfilter, Polarisationsfilter oder Blenden (z. B. Ringblende oder Streifenblende) und zusätzliche Keilprismen zur Strahlablenkung am Ort der Objektivpupille eingeführt werden.

Die Raster R können im allgemeinen nach verschiedenen Kriterien klassifiziert werden:

1.1 Unterscheidung nach der optischen Wirkung:

1.1.1 Lichtabsorbierende Raster

1.1.2 Lichtablenkende Raster

1.1.2.1 Lichtstreuende Raster

1.1.2.2 Lichtbeugende Raster

1.1.2.3 Reflexionsraster (Spiegelraster)

1.1.2.4 Lichtbrechende Raster

1.1.2.4.1 Fokussierende Raster (z. B. Linsen- oder Zylinderlinsenraster)

1.1.2.4.2 Prismenraster (z. B. Pyramiden- oder Tripelprismenraster)

1.1.2.4.3 Kombinierte Raster

1.2 Unterscheidung nach dem Ortsfrequenzspektrum:

1.2.1 Periode Raster eindimensional oder zweidimensional

1.2.2 Texturierte Raster

1.2.3 Statistische Raster oder Rauschraster

1.2.4 Kombinierte Raster

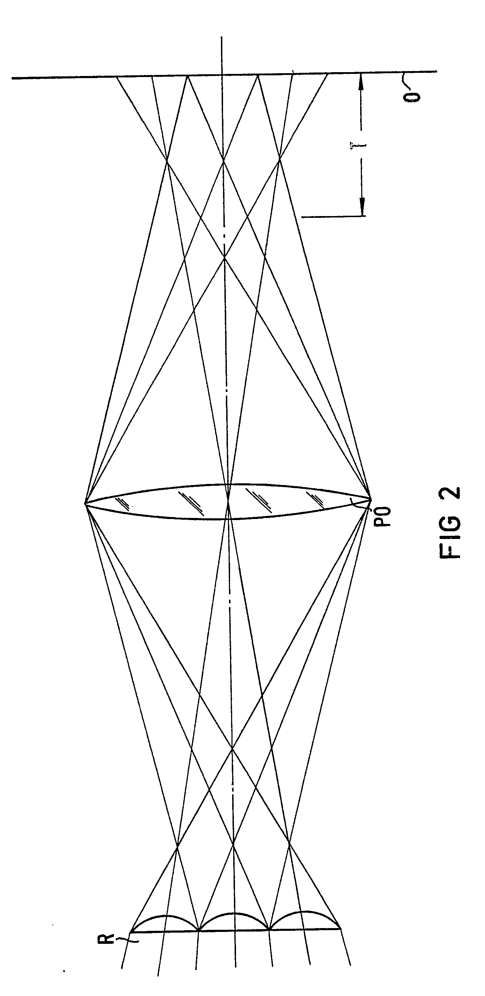

In den folgenden Beispielen werden zunächst nur lichtbrechende Raster und Kombinationen mit lichtabsorbierenden Rastern betrachtet. In der Figur 2 ist ein Strahlen bei der strukturierten Beleuchtung der Oberfläche O mit einem Linsenraster als Raster bzw. einem Zylinderlinsenraster dargestellt.

## 2. Entfernungsabhängige Meßeffekte bei der Projektion lichtbrechender oder kombinierter Raster

### 2.1 Entfernungsabhängige Abmessungen von projizierten Strukturen

Bei Verwendung eines Linsenrasters oder eines Zylinderlinsenrasters ist jeder Linse des Rasters ein Fokuspunkt oder eine Fokuslinie im Projektionsbereich zugeordnet. Wie in der Figur 2 dargestellt, entstehen auf der zu prüfenden Oberfläche Leuchtflecken oder Leuchtstreifen, deren Größen sich entfernungsabhängig verändern. Eine Tiefe T des Meßbereiches ist dem Strahlengang der Figur 2 entnehmbar. Eine Lösungsvariante ist die Projektion von Ringen durch eine Ringblende im Objektiv oder durch ein Ringlicht.

### 2.2 Entfernungsabhängige Durchmodulation

Bei unscharfer Bildaufnahme mit einer hier nicht dargestellten Videokamera kann für den Fall 2.1 auch die Durchmodulation eine geeignete Meßgröße sein. Diese ist auch dann verwertbar, wenn bei scharfer Bildaufnahme Vielfache der Meßvolumen - hier Tiefe T - genutzt werden. Dann ergeben sich entfernungsabhängige Durchmodulationsänderungen aufgrund von Überlagerungseffekten.

### 2.3 Entfernungsabhängige Differenz der Abmessungen von projizierten Strukturen

Wie im Falle 2.1 basiert dieser Vorschlag auf Linsenrastern oder Zylinderlinsenrastern. Jeweils benachbarte Linsen sollen jedoch Brennweiten haben, die sich nach ihrem Betrag und/oder ihrem Vorzeichen unterscheiden. Dabei werden Leuchtfleck- oder Leuchtstreifenpaare projiziert, deren Abmessungsdifferenz entfernungsabhängig ist. Entsprechendes gilt für die Projektion von Ringen.

### 2.4 Entfernungsabhängige Ortsfrequenz

Dieser Meßeffekt ergibt sich beispielsweise bei Kombination eines Zylinderlinsenrasters mit einem lichtabsorbierenden oder lichtablenkenden Streifenraster. Dabei müssen mehrere Perioden des Streifenrasters in die Öffnung einer Zylinderlinse passen.

### 2.5 Entfernungsabhängige Distanz von benachbarten Rasterstrukturen

Dies ist realisierbar mit exzentrischen Blenden auf Linsenrastern, z. B. Kreisblenden auf Linsenraster und Streifenblenden auf Zylinderlinsenraster. Dabei sollen die Blenden auf jeweils benachbarten Linsen unterschiedliche Positionen haben. Es entstehen bei der Projektion paarige Leuchtflekken oder Leuchtstreifen, deren gegenseitige Abstände entfernungsabhängig sind.

### 2.6 Entfernungsabhängige Rasterliniendrehung

Dies läßt sich realisieren durch Überlagerung eines Zylinderlinsenrasters mit einem streifenförmigen lichtabsorbierenden oder lichtablenkenden Streifenraster. Die Streifen schneiden dabei einen jeweils schräg verlaufenden Teil aus den einzelnen Zylinderlinsen aus. Eine alternative Lösung besteht darin, derartige Ausschnitte linear aneinanderzureihen und mehrere auf diese Weise erzeugte lichtbrechende Rasterstreifen nebeneinander anzuordnen.

### 2.7 Entfernungsabhängige Überlagerungseffekte: Projiziertes Moiré und Ortsfrequenzänderung

Geeignet sind Prismenraster, die eine unterschiedliche Lichtablenkung bewirken. So ergeben sich z. B. mit einem sägezahnförmigen Raster zwei verschiedene Lichtablenkrichtungen. Diese entsprechen, mit eindimensionalen Prismenrastern, einer doppelten Streifenbeleuchtung, die entfernungsabhängige Überlagerungseffekte, wie Moiré-Linien und Ortsfrequenzänderungen, erzeugen. Mit zweidimensionalen Prismenrastern können in ähnlicher Weise Überlagerungseffekte von projizierten Lichtpunkten oder Leuchtflecken entstehen.

### 2.8 Entfernungsabhängige Texturen

Hierfür geeignet sind texturierte oder statistische Raster mit lichtablenkender Wirkung. Das Ortsfrequenzspektrum der projizierten Textur ist entfernungsabhängig. Für das Beispiel einer welligen transparenten Folie, die ein Rauschraster darstellt, kann bei Scharfabbildung und eventuell bei hinreichender Öffnung des Projektionsobjektives die projizierte Textur völlig verschwinden (Kontrast Null). Entfernungsänderungen entsprechen dann einer Defokussierung, welche einen zunehmenden Kontrast der projizierten Textur zur Folge haben.

### 2.9 Entfernungsabhängige Farbtrennung oder Trennung in unterschiedliche Polarisationszustände

Zur Erzeugung entfernungsabhängiger Farbeffekte oder Polarisationseffekte können entsprechende Filter in die Pupille des Projektionsobjektives eingeführt werden. Die Möglichkeiten zur Erzeugung entfernungsabhängiger Farbeffekte sind vielfältig, weil ihre Anwendung prinzipiell bei allen Rasterarten möglich ist. Für das Beispiel eines Zylinderlinsenrasters ist eine Pupillenteilung sinnvoll, wobei z. B. ein Rot- und ein Grünfilter jeweils einer Pupillenhälfte zugeordnet wird. Bei Ausrichtung parallel zum Raster ergeben sich projizierte Farbstreifen. Im fokussierten Zustand überdecken sich die verschieden gefärbten Streifen, so daß die Mischfarbe entsteht. Bei Entfernungsänderung (Defokussierung) entsteht eine zunehmende Farbtrennung.

### Ansprüche

1. Optische Anordnung zur dreidimensionalen Formerfassung von Prüfobjekten mit strukturierter Beleuchtung,
- die eine Lichtquelle (LQ), eine Kondensoroptik (KO) und ein Projektionsobjektiv (PO) enthält, **dadurch gekennzeichnet, daß**
- zwischen der Kondensoroptik (KO) und dem Projektionsobjektiv (PO) ein lichtablenkendes Raster (R) angeordnet ist.

2. Optische Anordnung nach Anspruch 1, **dadurch gekennzeichnet, daß**
-das lichtablenkende Raster linsenförmig ist.

3. Optische Anordnung nach Anspruch 1, **durch gekennzeichnet, daß**
-das lichtablenkende Raster zylinderlinsenförmig ist.

4. Optische Anordnung nach einem der Ansprüche 1 bis 3, **dadurch gekennzeichnet, daß**
-mehrere Blenden oder Filter (FB) hintereinander angeordnet sind.

5. Optische Anordnung nach einem der Ansprüche 1 bis 4, **dadurch gekennzeichnet, daß**
-zwischen dem Projektionsobjektiv (PO) und der zu prüfenden Oberfläche (O) ein Filter oder eine Blende (FB) angeordnet ist.

FIG 1

88 P 4 3 6 E

EP 0 348 709 A2

EP 0 348 709 A2

FIG 2